# EUROPÄISCHE PATENTSCHRIFT

(11) **EP 1 014 065 B1**
(45) Veröffentlichungstag und Bekanntmachung des Hinweises auf die Patenterteilung: **08.03.2006**
(21) Anmeldenummer: 98123831.4
(22) Anmeldetag: 15.12.1998
(51) Int. Cl.: G01L 7/04

(54) **Messsystem für ein Druckmessgerät sowie Druckmessgerät**
Measuring system for a pressure transducer and pressure transducer
Système de mesure pour un capteur de pression et capteur de pression

(43) Veröffentlichungstag der Anmeldung: 28.06.2000
(73) Patentinhaber: WIKA ALEXANDER WIEGAND GmbH & CO., D-63911 Klingenberg (DE)
(72) Erfinder: Wiegand, Alexander, Dipl.-Ing., 63906 Erlenbach (DE)
(74) Vertreter: TBK-Patent

(56) Entgegenhaltungen:
- DE-C- 3 508 246
- US-A- 3 921 455
- US-A- 4 192 193
- US-A- 5 481 921

## Beschreibung

Die Erfindung bezieht sich auf ein Meßsystem für ein Druckmeßgerät gemäß dem Oberbegriff von Patentanspruch 1 sowie ein Druckmeßgerät gemäß dem Oberbegriff von Patentanspruch 7.

Ein Druckmeßgerät mit den Merkmalen des Oberbegriffs von Patentanspruch 7 ist bekannt.

Bei dem bekannten Druckmeßgerät ist der Geräteanschluß üblicherweise als Gewindezapfen mit einem Außengewinde ausgebildet, wobei es allerdings auch möglich ist, den Geräteanschluß als Gewindemuffe mit einem Innengewinde auszubilden. Der Geräteanschluß befindet sich auf der Außenseite des Gehäuses und kann entweder in eine Gewindebohrung oder auf einen mit einem Außengewinde versehenen Gewindezapfen des den Meßstoff führenden Systems geschraubt werden. Üblicherweise sind bei dem bekannten Druckmeßgerät dessen Anschlußeinrichtung mit dem Geräteanschluß und der Federträger einstückig miteinander ausgebildet. Dies heißt mit anderen Worten, daß ein Abschnitt des Federträgers die Anschlußeinrichtung des Druckmeßgerätes bildet.

Das bekannte Druckmeßgerät ist entweder mit einem sogenannten radialen Anschluß oder mit einem sogenannten rückseitigen Anschluß versehen. Im Falle eines rückseitigen Anschlusses befindet sich der Geräteanschluß an der Rückwand des Gehäuses des Druckmeßgerätes, wobei der Geräteanschluß, wenn er als Gewindezapfen ausgebildet ist, von der Rückwand des Gehäuses vorsteht. Im Falle eines radialen Anschlusses befindet sich der Geräteanschluß an der Seitenwand des Gehäuses, wobei der Geräteanschluß, wenn er als Gewindezapfen ausgebildet ist, von der Seitenwand des Gehäuses vorsteht. Da bei dem bekannten Druckmeßgerät die Anschlußeinrichtung in den Federträger integriert ist und ein Abschnit desselben den Geräteanschluß bildet, muß für ein Druckmeßgerät mit einem radialen Anschluß der Geräteanschluß am Federträger radial angeordnet sein, d.h. sich in Radialrichtung bezüglich der Zeigerwelle erstrecken, während für ein Druckmeßgerät mit einem rückseitigen Anschluß der Geräteanschuß am Federträger rückseitig angeordnet sein muß, d.h. sich in Axialrichtung der Zeigerwelle nach hinten erstrecken muß. Dies bedeutet, daß sich ein fertig zusammengebautes Meßsystem nur entweder für ein Druckmeßgerät mit einem radialen Anschluß oder für ein Druckmeßgerät mit einem rückseitigen Anschluß eignet.

Dadurch entsteht für den Hersteller von Druckmeßgeräten das Problem, daß er sowohl Meßsysteme mit radialem Geräteanschluß als auch Meßsysteme mit rückseitigem Geräteanschluß pro Meßbereich auf Lager halten muß, wenn er in der Lage sein will, ansonsten gleiche Druckmeßgeräte je nach Kundenwunsch entweder mit radialem Anschluß oder mit rückseitigem Anschluß schnell liefern zu können. Diesem hohen Fertigungs- und Lagerhaltungsaufwand kann teilweise dadurch vorgebeugt werden, daß Baueinheiten aus lediglich dem Federträger und der Rohrfeder sowohl mit radialem Geräteanschluß als auch mit rückseitigem Geräteanschluß gefertigt und auf Lager genommen werden und daß der Zusammenbau dieser Baueinheiten mit dem Zeigerwerk zum Meßsystem erst erfolgt, wenn aufgrund eines Kundenauftrags feststeht, ob die zu liefernden Druckmeßgeräte einen radialen oder einen rückseitigen Anschluß haben sollen. Bei diesem Vorgehen ist jedoch eine schnelle Auslieferung der Druckmeßgeräte nicht möglich, weil die üblicherweise notwendige und zeitaufwendige Justierung des Meßsystems erst am fertig montierten Meßsystem oder frühestens während der Montage des Meßsystems durchgeführt werden kann.

Die Veröffentlichung FR-A1-25 32 423 offenbart ein Druckmeßgerät, mit dem das vorstehend erläuterte Problem gelöst werden soll. Bei diesem bekannten Druckmeßgerät sind im Federträger eine rückseitige Gewindebohrung und eine radiale Gewindebohrung ausgebildet, die beide in Verbindung mit einem im Federträger ausgebildeten Druckkanal stehen. Je nach Bedarf wird ein als separates Teil gefertigter Geräteanschluß entweder in die rückseitige oder in die radiale Gewindebohrung geschraubt und wird die jeweils andere Gewindebohrung mittels einer Verschlußschraube verschlossen. Diese Lösung hat den Nachteil, daß die Herstellung des Federträgers vergleichsweise kompliziert ist und daß es notwendig ist, an zwei Stellen, nämlich sowohl an der radialen Gewindebohrung als auch an der rückseitigen Gewindebohrung den Druckkanal zuverlässig nach außen abzudichten.

Die Veröffentlichung DE-C2-19 530 024 offenbart ein Druckmeßgerät, bei dem der Geräteanschluß als rückseitig angeordneter Steckzapfen ausgebildet ist.

Ein Meßsystem mit den Merkmalen des Oberbegriffs von Patentanspruch 1 und ein Druckmeßgerät mit den Merkmalen des Oberbegriffs von Patentanspruch 7 sind bekannt durch die Veröffentlichung DE-C1-3508246. Bei diesem bekannten Meßsystem und Druckmeßgerät ist der Streckzapfen als Rohrstück ausgebildet, das in das Verbindungsteil des Federträgers eingesetzt und mit diesem verschweißt ist. Das Halteteil, in dessen Ausnehmung das erste Ende der Rohrfeder eingesetzt ist, ist einstückig mit dem Verbindungsteil ausgebildet. Die obere Platine ist separat vom Federträger ausgebildet und an diesem befestigt. Bei einer ersten Ausführungsform dieses bekannten Meßsystems und Druckmeßgerätes ist in der Rückwand des Gehäuses eine Bohrung ausgebildet. Das Verbindungsteil liegt an der Rückwand des Gehäuses an, und das den Steckzapfen bildende Rohrstück, dessen Achse parallel zur Zeigerwelle verläuft, erstreckt sich durch die Bohrung in der Rückwand des Gehäuses nach außerhalb desselben. Die Anschlußeinrichtung mit dem Geräteanschluß ist auf das Rohrstück derart gesteckt, daß dieses durch den Druckkanal der Anschlußeinrichtung verläuft, und ist mit dem Rohrstück verschweißt. Bei dieser Ausführungsform ist das Druckmeßgerät ein Druckmeßgerät mit einem rückseitigen Anschluß. Die Veröffentlichung DE-C1-3508246 offenbart ferner eine zweite Ausführungsform des Meßsystems und des Druckmeßgerätes, bei der die Achse des den Steckzapfen bildenden Rohrstücks radial bezüglich der Zeigerwelle verläuft und sich durch eine Seitenwand des Gehäuses des Druckmeßgerätes erstreckt, wobei bei dieser Ausführungsform die Anschlußeinrichtung mit dem Geräteanschluß auf der Seitenwand des Gehäuses sitzt und das Druckmeßgerät dementsprechend einen radialen Anschluß aufweist. Je nach dem, ob das Druckmeßgerät einen radialen oder einen rückseitigen Anschluß aufweist, ist somit das Meßsystem verschieden ausgebildet. Dies bedeutet wiederum, daß sich ein fertig zusammengebautes Meßsystem nur entweder für ein Druckmeßgerät mit einem radialen Anschluß oder für ein Druckmeßgerät mit einem rückseitigen Anschluß eignet, so daß das bereits vorstehend erörterte Problem auftritt.

Der Erfindung liegt die Aufgabe zugrunde, das gattungsgemäße Meßsystem derart weiterzubilden, daß durch die Ausbildung des Meßsystems nicht bereits die Art und der Ort des Geräteanschlußes eines Druckmeßgerätes, in das das Meßsystem einbaubar ist, vorgegeben ist. Insbesondere soll sich das zu schaffende Meßsystem sowohl für ein Druckmeßgerät mit einem radialen Anschluß als auch für ein Druckmeßgerät mit einem rückseitigen Anschluß eignen. Ferner soll das zu schaffende Meßsystem möglichst kompakt sein.

Der Erfindung liegt ferner die Aufgabe zugrunde, das gattungsgemäße Druckmeßgerät dahingehend weiterzubilden, daß Ort und Art seines Geräteanschlusses frei gewählt werden können, ohne daß dies ein je nach Art und Ort des Geräteanschlusses unterschiedliches Meßsystem erfordert.

Die erstgenannte Aufgabe wird erfindungsgemäß durch das Meßsystem gemäß Patentanspruch 1 gelöst. Bei dem erfindungsgemäßen Meßsystem ist zusätzlich zu den Merkmalen des Oberbegriffs von Patentanspruch 1 vorgesehen, daß das Halteteil, das Verbindungsteil, der Steckzapfen und die obere Platine einstückig miteinander ausgebildet sind, und daß der Steckzapfen radial neben der Zeigerwelle in geringerem radialen Abstand von dieser als die Ausnehmung (48) des Halteteils und mit Abstand zum Halteteil angeordnet ist.

Ein Meßsystem mit allen Merkmalen des Oberbegriffs von Patentanspruch 1 gehört aufgrund der älteren, jedoch nicht vorveröffentlichten europäischen Patentanmeldung EP 0 979 991 A1 zum Stand der Technik. Bei diesem zum Stand der Technik gehörenden Meßsystem sind entweder das Halteteil, das Verbindungsteil und der Steckzapfen einstückig miteinander ausgebildet, jedoch nicht einstückig mit einer der Platinen des Zeigerwerks, oder es sind einerseits das Halteteil und eine der Platinen einstückig miteinander ausgebildet und andererseits der Steckzapfen und das Verbindungsteil einstückig miteinander ausgebildet. Dabei ist der Steckzapfen stets in gleichem radialen Abstand von der Zeigerwelle wie das Halteteil und ohne radialen Abstand zum Halteteil angeordnet.

Das erfindugnsgemäße Meßsystem wird an das den Meßstoff, dessen Meßdruck gemessen werden soll, führende System mittelbar oder unmittelbar dadurch angeschlossen, daß der Steckzapfen des Federtidgers mit einer komplementär zum Steckzapfen geformten Steckmuffe zusammengesteckt wird. Die Steckmuffe kann beispielsweise Bestandteil einer mit einem Geräteanschluß versehenen Anschlußeinrichtung eines Druckmeßgerätes sein, wobei der Steckzapfen des Meßsystems nicht zugleich den Geräteanschluß bildet. Art und Ort des Geräteanschlusses am Druckmeßgerät sind somit durch das Meßsystem nicht vorgegeben. Vielmehr eignet sich das erfindugnsgemäße Meßsystem sowohl für ein Druckmeßgerät mit einem radialen Anschluß als auch für ein Druckmeßgerät mit einem rückseitigen Anschluß. Dasselbe Meßsystem kann daher zur Herstellung sowohl eines Druckmeßgerätes mit radialem Anschluß als auch zur Herstellung eines Druckmeßgerätes mit rückseitigem Anschluß verwendet werden. Um eine bestimmte Anzahl von Druckmeßgeräten, die je nach Kundenwunsch entweder einen radialen Anschluß oder einen rückseitigen Anschluß haben, schnell liefern zu können, reicht es aus, fertig montierte und justierte Meßsysteme pro Meßbereich in dieser Anzahl herzustellen und auf Lager zu halten. Lediglich die Anschlußeinrichtungen mit radialem Geräteanschluß und die Anschlußeinrichtungen mit rückseitigem Geräteanschluß müssen jeweils in der bestimmten Anzahl vorrätig gehalten werden. Die Fertigmontage der Druckmeßgeräte kann in kurzer Zeit erfolgen, da die zeitaufwendige Justierung der Meßsysteme bereits vor dem Zusammenbau derselben mit der Anschlußeinrichtung durchgeführt werden kann.

Dadurch, daß bei dem erfindungsgemäßen Meßsystem der Steckzapfen hinter einer die Rückseite der oberen Platine enthaltenden Ebene radial neben der Zeigerwelle in geringerem radialen Abstand von dieser als das Halteteil und mit Abstand zum Halteteil angeordnet ist, befindet er sich innerhalb eines Raumes, der ohnehin für das zeigerwerk, die Rohrfeder und das Halteteil des Federträgers vorgesehen werden muß, so daß der Raumbedarf des Meßsystems gering ist.

Der zusammenbau des Steckzapfens mit der komplementären Steckmuffe erfordert lediglich eine translatorische Bewegung und keine Drehbewegung. Dies erweist sich insbesondere dann als vorteilhaft, wenn das Meßsystem in das Innere eines Gehäuses oder eine andere Kammer eingesetzt wird und innerhalb des Gehäuses bzw. der Kammer kein ausreichender Raum vorhanden ist, um das Meßsystem mehrmals um 360° drehen zu können, wie dies beispielsweise notwendig wäre, wenn statt einer steckverbindung eine schraubverbindung vorgesehen wäre.

Das erfindungsgemäße Meßsystem ist zwar vorrangig geschaffen worden für ein Druckmeßgerät mit einem Gehäuse und einem außen am Gehäuse angeordneten Geräteanschluß. Es ist jedoch nicht nur bei einem solchen Druckmeßgerät sondern auch bei einem Druckmeßgerät ohne äußeren Geräteanschluß anwendbar. Beispielsweise kann die komplementäre Steckmuffe unmittelbar an dem den Meßstoff führenden System ausgebildet sein und der Steckzapfen des Federträgers des Meßsystems damit zusammengefügt werden.

Die Ausbildung des Meßsystems inder weise, daß das Halteteil des Federträgers, das Verbindungsteil des Federträgers, der Steckzapfen und die obere Platine einstückig, miteinander ausgebildet sind, hat insbesondere den vorteil, daß es nicht notwendig ist, die obere Platine am Federträger zu montieren, und daß das Halteteil des Federträgers und die obere Platine relativ zueinander genau ihre Sollstellungen einnehmen.

Die Ausbildung des Meßsystems in der Weise, daß die Achse des Steckzapfens parallel zur Zeigerwelle verläuft und die Mündung der Bohrung des Steckzapfens an dessen von der oberen Platine abgewandtem Ende angeordnet ist, ermöglicht es, den Steckzapfen und die komplementäre Steckmuffe durch eine geradlinige Bewegung in Richtung der Achse der Zeigerwelle ineinanderzustecken, was den Einbau des Meßsystems in ein vorne offenes Gehäuse eines Druckmeßgerätes erleichtert.

Weitere vorteilhafte Ausgestaltungen des erfindungsgemäßen Meßsystems sind in den abhängigen Ansprüchen 2 bis 6 gekennzeichnet.

Die zweitgenannte Aufgabe wird erfindungsgemäß durch das Druckmeßgerät gemäß Patentanspruch 7 gelöst. Dieses zeichnet sich dadurch aus, daß das Meßsystem die Merkmale des Patentanspruchs 1 und gegebenenfalls eines oder mehrerer der Ansprüche 2 bis 6 aufweist und daß die Anschlußeinrichtung sich von der Außenseite des Gehauses in dessen Inneres erstreckt und innerhalb des Gehäuses eine Steckmuffe aufweist, die komplementär zum Steckzapfen des Federträgers des Meßsystems geformt ist und in Eingriff mit dem Steckzapfen des Federträgers steht.

Bei dem erfindungsgemäßen Druckmeßgerät stehen der Steckzapfen des Federträgers des Meßsystems und die Steckmuffe der Anschlußeinrichtung in Eingriff miteinander, so daß diese beiden Steckbauteile eine Steckverbindung bilden. Diese Steckverbindung liegt geschützt innerhalb des Gehäuses des Druckmeßgerätes.

Hinsichtlich der Eigenschaften des erfindungsgemäßen Druckmeßgerätes und der durch dessen erfindungsgemäße Ausbildung erzielten Wirkungen gelten die vorstehenden Erläuterungen des erfindungsgemäßen Meßsystems, soweit sich diese Erläuterungen auf das erfindungsgemäße Meßsystem als Bestandteil eines Druckmeßgerätes mit einem Gehäuse und einer Anschlußeinrichtuhg beziehen, die einen Geräteanschluß aufweist.

Bei dem erfindungsgemäßen Druckmeßgerät sind die Anschlußeinrichtung einerseits und der Federträger andererseits zwei separat gefertigte Einrichtungen, die mittels der durch den Steckzapfen und die Steckmuffe gebildeten Steckverbindung miteinander verbunden sind. Dies ermöglicht es, den Federträger einerseits und die Anschlußeinrichtung andererseits aus verschiedenen Werkstoffen zu fertigen, so daß die Anschlußeinrichtung nicht notwendigerweise aus Metall zu bestehen braucht, sondern beispielsweise aus einem Kunststoff gefertigt werden kann.

Vorteilhafte Ausgestaltungen des erfindungsgemäßen Druckmeßgerätes sind in den-Unteransprüchen 8 bis 18 gekennzeichnet.

Ausführungsbeispiele der Erfindung sind in den Zeichnungen dargestellt und werden im folgenden erläutert. Es zeigen:
Fig. 1 eine Vorderansicht eines ersten Ausführungsbeispiels eines erfindungsgemäßen Druckmeßgerätes, wobei dessen Sichtscheibe, Zeiger und Zifferblatt weggelassen sind;
Fig. 2 eine Ansicht des Druckmeßgerätes von links in Fig. 1 wobei dessen Gehäuse, Zifferblatt und Sichtscheibe geschnitten dargestellt sind;
Fig. 3 eine Figur 1 entsprechende Vorderansicht eines zweiten Ausführungsbeispiels des erfindungsgemäßen Druckmeßgerätes;
Fig. 4 eine Figur 2 entsprechende Ansicht der zweiten Ausführungsform des Druckmeßgerätes;
Fig. 5 eine Vorderansicht eines Systemträgers des Druckmeßgerätes gemäß den Figuren 1 und 2;
Fig. 6 eine Seitenansicht des Systemträgers von links in Fig. 5;
Fig. 7 eine Draufsicht auf den Systemträger gemäß Fig. 5;
Fig. 8 eine Ansicht des Systemträgers in Richtung X in Fig. 5;
Fig. 9 eine Vorderansicht einer Anschlußeinrichtung des Druckmeßgerätes gemäß den Figuren 1 und 2;
Fig. 10 eine Seitenansicht der Anschlußeinrichtung von links in Fig. 9;
Fig. 11 eine Vorderansicht einer Anschlußeinrichtung des Druckmeßgerätes gemäß den Figuren 3 und 4;
Fig. 12 eine Seitenansicht der Anschlußeinrichtung von links in Fig. 11;
Fig. 13 eine Figur 8 entsprechende Ansicht einer zweiten Ausführungsform des Systemträgers; und
Fig. 14 ein drittes Ausführungsbeispiel des erfindungsgemäßen Druckmeßgerätes in Figur 2 ähnlicher Darstellung.

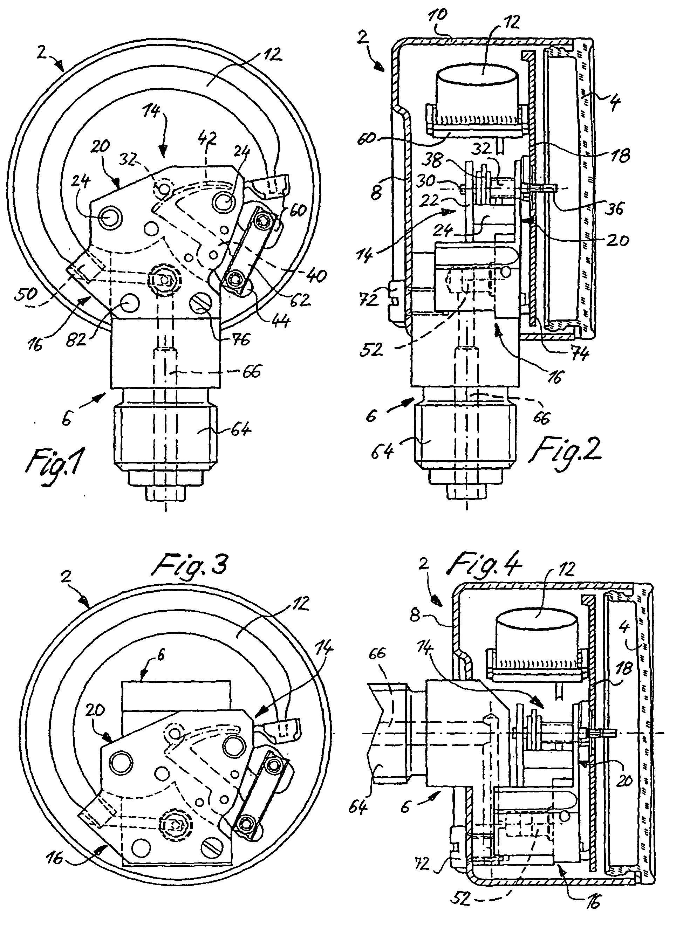

Im folgenden wird zunächst unter Bezugnahme auf die Figuren 1, 2 und 5 bis 10 ein erstes Ausführungsbeispiel des erfindungsgemäßen Druckmeßgerätes erläutert, das mit einem erfindungsgemäßen Meßsystem versehen ist.

Das Druckmeßgerät umfaßt ein Gehäuse 2, eine durchsichtige Sichtscheibe 4, ein innerhalb des Gehäuses 2 angeordnetes Meßsystem sowie eine Anschlußeinrichtung 6.

Das Gehäuse 2 des dargestellten Ausführungsbeispiels besteht aus Blech und weist eine im wesentlichen ebene Rückwand 8 sowie eine zylindrische Seitenwand 10 auf. In die offene Vorderseite des Gehäuses 2 ist die durchsichtige Sichtscheibe 4 eingesetzt. Das Meßsystem umfaßt eine metallische Rohrfeder 12, die beim dargestellten Ausführungsbeispiel kreisbogenförmig gekrümmt ist, ein Zeigerwerk 14, einen Federträger 16 sowie ein Zifferblatt 18. In Fig. 2 ist von der Rohrfeder 12 lediglich deren freies Ende dargestellt.

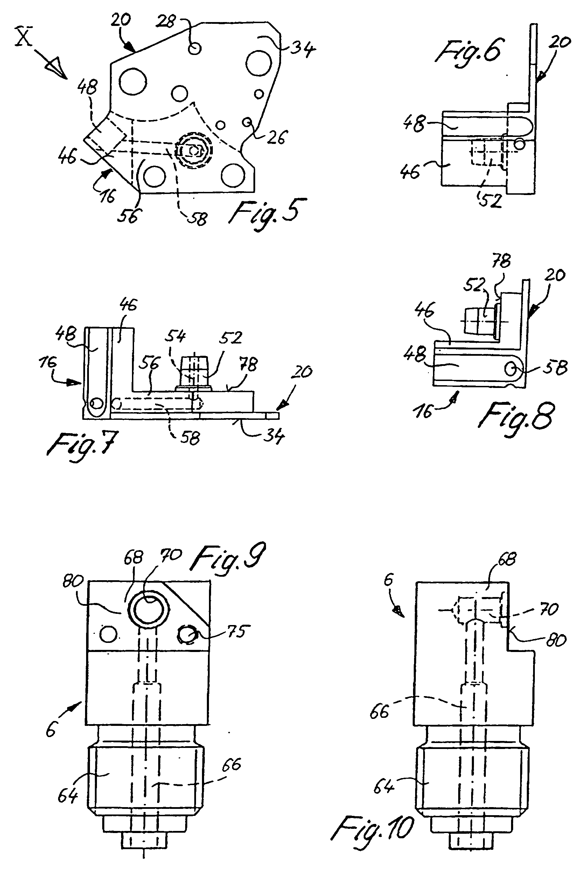

Das Zeigerwerk 14 umfaßt eine im wesentlichen ebene obere Platine 20 und eine mit Abstand von der oberen Platine 20 und parallel dazu angeordnete untere Platine 22. Die beiden Platinen 20 und 22 sind mit Hilfe von zwei Stehbolzen 24 fest miteinander verbunden. In der oberen Platine 20 sind zwei Lagerlöcher 26 und 28 ausgebildet (siehe Fig. 5). Entsprechende Lagerlöcher sind auch in der unteren Platine 22 ausgebildet. In dem Lagerloch 28 sowie dem entsprechenden Lagerloch in der unteren Platine 22 ist eine Zeigerwelle 30 drehbar gelagert, die ein Ritzel 32 trägt, das zwischen der oberen Platine 20 und der unteren Platine 22 angeordnet ist. Die von der unteren Platine 22 abgewandte Oberfläche der oberen Platine 20 ist deren Vorderseite 34. Von der Vorderseite 34, die der Sichtscheibe 34 zugewandt ist, steht ein Abschnitt der Zeigerwelle 30 vor, der einen Zeigerzapfen 36 bildet. An der Zeigerwelle 30 greift eine lediglich in Fig. 2 gezeigte, spiralförmige Vorspannfeder 38 an.

In dem Lagerloch 26 und dem entsprechenden Lagerloch in der unteren Platine 22 ist ein Zahnsegment 40 schwenkbar gelagert, das einen mit dem Ritzel 32 kämmenden verzahnten Abschnitt 42 sowie einen Hebelabschnitt 44 aufweist.

Der Federträger 16 umfaßt ein Halteteil 46 mit einer als Nut ausgebildeten Ausnehmung 48, in die ein erstes Ende 50 der Rohrfeder 12 eingesetzt ist. Das erste Ende 50 ist fest mit dem Halteteil 46 verbunden. Diese feste Verbindung wird üblicherweise durch Löten hergestellt.

Der Federträger 16 umfaßt ferner ein als Steckzapfen 52 ausgebildetes erstes Steckbauteil. Der Steckzapfen 52 weist an seinem freien, in Fig. 7 oberen Ende eine kegelstumpfförmige Oberfläche und im Anschluß daran eine kreiszylindrische Oberfläche auf, wie dies insbesondere in den Figuren 7 und 8 erkennbar ist. An seinem in Fig. 7 unteren Ende ist der Steckzapfen 52 mit einer Ringschulter versehen. Entlang der Achse des Steckzapfens 52 verläuft durch diesen eine Bohrung 54, die am freien, in Fig. 7 oberen Ende des Steckzapfens 52 eine Mündung aufweist.

Der Federträger 16 weist ferner ein Verbindungsteil 56 auf, in dem ein Verbindungskanal 58 ausgebildet ist, der die Bohrung 54 im Steckzapfen 52 mit der Ausnehmung 48 des Halteteils 46 verbindet, so daß durch den Federträger 16 hindurch der Meßdruck von der Bohrung 54 in das Innere der Rohrfeder 12 geleitet werden kann.

Wie in Fig. 1 erkennbar ist, hält der Federträger 16 die Rohrfeder 12 derart, daß diese bogenförmig das Zeigerwerk 14 umgibt. Am anderen, zweiten Ende der Rohrfeder 12 ist diese dicht verschlossen und trägt sie ein Federendstück 60. Das Federendstück 60 ist mittels einer Zugstange 62 gelenkig mit dem Hebelabschnitt 44 des Zahnsegmentes 40 derart verbunden, daß die in Abhängigkeit von der Höhe des Meßdrucks erfolgende Auslenkung des freien, zweiten Endes der Rohrfeder 12 mittels der Zugstange 62 zum Zahnsegment 40 übertragen wird. Dadurch wird das Zahnsegment 40 in Abhängigkeit von der Höhe des Meßdrucks verschwenkt, und diese Schwenkbewegung wird aufgrund des Eingriffs zwischen dem verzahnten Abschnitt 42 und dem Ritzel 32 in eine Drehung der Zeigerwelle 30 umgewandelt.

Das Zifferblatt 18 ist neben der Vorderseite 34 der oberen Platine 20 angeordnet und an der oberen Platine 20 befestigt. Der Zeigerzapfen 36 erstreckt sich durch das Zifferblatt 18 und trägt einen in den Figuren 1 und 2 nicht dargestellten Zeiger, dessen Stellung vor dem Zifferblatt 18 durch die Drehstellung der Zeigerwelle 30 bestimmt ist und somit dem Meßdruck entspricht, so daß die Höhe des Meßdrucks durch die Sichtscheibe 4 hindurch am Zifferblatt 18 entsprechend der Zeigerstellung abgelesen werden kann.

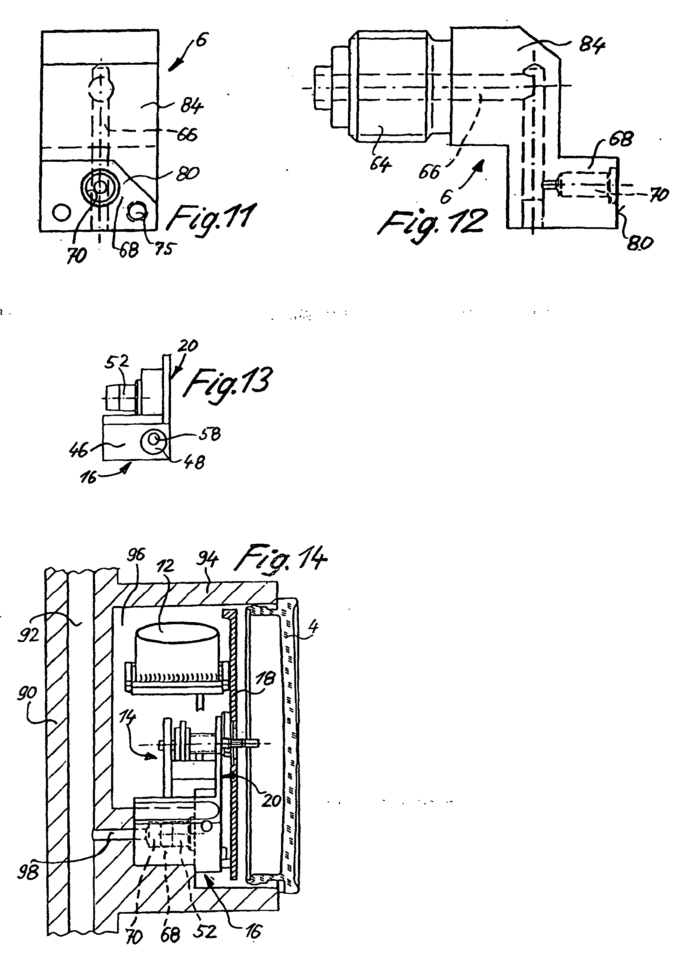

Die Anschlußeinrichtung 6 ist beim dargestellten Ausführungsbeispiel als einstückiges Bauteil ausgebildet, das für sich in den Figuren 9 und 10 dargestellt ist. Die Anschlußeinrichtung 6 hat im wesentlichen die Form eines Quaders, an den ein Geräteanschluß 64, der als Gewindezapfen mit einem Außengewinde ausgebildet ist, angesetzt ist. An dem vom Geräteanschluß 64 abgewandten Ende der Anschlußeinrichtung 6 weist diese ein als Steckmuffe 68 mit einer Bohrung 70 ausgebildetes zweites Steckbauteil auf. Die Steckmuffe 68 ist komplementär zu dem Steckzapfen 52 des Federträgers 16 geformt. Dies bedeutet mit anderen Worten, daß die Bohrung 70 einen dem Durchmesser des Steckzapfens 52 entsprechenden Durchmesser sowie eine Tiefe hat, die größer als die Länge des Steckzapfens 52 in dessen Axialrichtung ist, so daß der Steckzapfen 52 in die Steckmuffe 68 eingesteckt werden kann. In der Anschlußeinrichtung 6 ist ein Druckkanal 66 ausgebildet, der vom freien Ende des Geräteanschlusses 64 zu der Bohrung 70 der Steckmuffe 68 verläuft.

In der Seitenwand 10 des Gehäuses 2 ist eine Öffnung ausgebildet, in die die Anschlußeinrichtung 6 derart eingesetzt ist, daß sich die Steckmuffe 68 im Inneren des Gehäuses 2 befindet und daß der Geräteänschluß 64 in Radialrichtung (bezüglich der zylindrischen Seitenwand 10 und auch bezüglich der Achse der Zeigerwelle 30) nach außen vom Gehäuse 2 vorsteht. Es handelt sich somit bei dem Druckmeßgerät gemäß den Figuren 1 und 2 um ein Druckmeßgerät mit einem radialen Anschluß. Der Geräteanschluß 64 dient dazu, das Druckmeßgerät an ein System anschließen zu können, das den Meßstoff führt, dessen Druck mittels des Druckmeßgerätes als Meßdruck gemessen werden soll.

Die Anschlußeinrichtung 6 ist am Gehäuse mittels einer durch dessen Rückwand 8 in die Anschlußeinrichtung 6 geschraubten Schraube 72 befestigt. Der Steckzapfen 52 des Federträgers 16 des Meßsystems ist in die Steckmuffe 68 der Anschlußeinrichtung 6 gesteckt, wie dies in Fig. 2 erkennbar ist. Der Steckzapfen 52 und die Steckmuffe 68 bilden somit eine druckleitende Steckverbindung zwischen der Anschlußeinrichtung 6 und dem Federträger 16. Der Meßdruck kann durch den Druckkanal 66, die Bohrung 70 der Steckmuffe 68, die Bohrung 54 im Steckzapfen 52 und den Verbindungskanal 58 in die Rohrfeder 12 gelangen.

Im Zuge der Herstellung des vorstehend beschriebenen Druckmeßgerätes wird das vorstehend beschriebene Meßsystem hergestellt, indem die Rohrfeder 12, das Zeigerwerk 14, der Federträger 16 und gegebenenfalls das Zifferblatt 18 zusammengebaut werden. Soweit dies erforderlich ist, wird dieses Meßsystem dann justiert, so daß ein fertig montiertes und justiertes Meßsystem vorliegt. Dieses Meßsystem kann mit der Anschlußeinrichtung 6 zusammengesteckt und verbunden werden, bevor die Anschlußeinrichtung 6 in das Gehäuse 2 eingebaut wird. Alternativ kann zunächst die Anschlußeinrichtung 6 in das Gehäuse 2 eingebaut und an diesem befestigt werden, wonach dann das Meßsystem von vorne in das Gehäuse 2 eingesetzt und die Steckverbindung zwischen der Anschlußeinrichtung 6 und dem Meßsystem hergestellt wird. Nachdem das Meßsystem mit der Anschlußeinrichtung 6 verbunden worden ist und die Anschlußeinrichtung 6 mit dem Gehäuse 2 verbunden worden ist, wird der nicht dargestellte Zeiger auf den Zeigerzapfen 36 gesetzt und wird die Sichtscheibe 4 in das Gehäuse 2 eingesetzt.

Die Ausbildung und die Gestaltung des Federträgers 16 und der oberen Platine 20 sind in den Figuren 5 bis 8 dargestellt. Das Halteteil 46, das Verbindungsteil 56, der Steckzapfen 52 und auch die obere Platine 20 sind einstückig ausgebildet, so daß diese Elemente gemeinsam einen Systemträger bilden, der zugleich die Funktionen des Federträgers für die Rohrfeder 12 und der oberen Platine des Zeigerwerks 14 erfüllt sowie der Rohrfeder 12 den Meßdruck zuleitet. Wie insbesondere die Figuren 6 bis 8 zeigen, sind sowohl das Halteteil 46 als auch das Verbindungsteil 56 und der Steckzapfen 52 auf derselben Seite der oberen Platine 20 angeordnet. Diese Elemente befinden sich hinter einer die Vorderseite 34 der oberen Platine 20 enthaltenden Ebene, und erstrecken sich zu derjenigen Seite der oberen Platine 20, auf der das Ritzel 32 angeordnet ist. Die Achse des Steckzapfens 52 verläuft parallel zur Zeigerwelle 32, und die Mündung der Bohrung 54 im Steckzapfen 52 befindet sich an dem von der oberen Platine 20 abgewandten Ende des Steckzapfens 52. Das Halteteil 46 und seine als Nut ausgebildete Ausnehmung 48 verlaufen im wesentlichen parallel zum Steckzapfen 52 und somit parallel zur Zeigerwelle 30. Der Verbindungskanal 58 verläuft im wesentlichen parallel zur Ebene der Rückseite der oberen Platine 20. Die in Richtung der Achse des Steckzapfens 52 gemessene Dicke des Verbindungsteils 56 ist gering und im wesentlichen dadurch bestimmt, daß die Wandstärke am Verbindungskanal 58 ausreichend sein muß.

Wie sich aus der Darstellung in den Figuren 2 und 5 bis 8 ergibt, ist der Steckzapfen 52 am Federträger 16 derart angeordnet und ausgebildet, daß er sich im Meßsystem radial neben der Zeigerwelle 30 befindet. Wie Fig. 2 erkennen läßt, ist der Steckzapfen 52 ferner derart angeordnet, daß sein Abstand von der Zeigerwelle 30 geringer ist als der Abstand des dem Steckzapfen 52 nächsten Randabschnitts 74 des Zifferblattes 18 von der Zeigerwelle 30. Auf diese Weise ist dafür gesorgt, dai3 sich der Steckzapfen 52 innerhalb eines Raumes befindet, der ohnehin als Einbauraum für das Meßsystem benötigt wird, so daß der für das Meßsystem benötigte Einbauraum nicht vergrößert ist, obwohl das Meßsystem den zusätzlich innerhalb des Gehäuses 2 vorgesehenen Steckzapfen 52 aufweist.

Die Ausbildung des Steckzapfens 52 derart, daß seine Achse parallel zur Zeigerwelle 30 verläuft und daß er nach hinten von der die Rückseite der oberen Platine 20 enthaltenden Ebene vorsteht, bringt den Vorteil mit sich, daß das Meßsystem von vorne in das Gehäuse 2 und mit der Anschlußeinrichtung 6 zusammengesteckt werden kann, nachdem die Anschlußeinrichtung 6 am Gehäuse 2 befestigt worden ist.

Der parallel zur Ebene der Rückseite der oberen Platine 20 verlaufende Verbindungskanal 58 erlaubt es, die Ausnehmung 48 des Halteteils 46 einerseits und den Steckzapfen 52 andererseits an - in der Vorderansicht gemäß Fig. 1 - verschiedenen Orten anzuordnen, insbesondere in voneinander verschiedenen Abständen von der Zeigerwelle 30, so daß die Ausnehmung 48 bezüglich der Zeigerwelle 30 radial weiter außen als der Steckzapfen 52 angeordnet ist.

Die Steckverbindung zwischen dem Steckzapfen 52 und der Steckmuffe 68 muß druckdicht sein. Diese Druckdichtheit kann durch eine Preßpassung zwischen dem Steckzapfen 52 und der Bohrung 70 der Steckmuffe 68 oder durch verkleben des Steckzapfens 52 mit der Steckmuffe 68 erreicht werden. Ferner ist es möglich, eine nicht dargestellte O-Ringdichtung zwischen dem Steckzapfen 52 und der Steckmuffe 68 anzuordnen.

Wenn die Steckverbindung zwischen dem Steckzapfen 52 und der Steckmuffe 68 nicht schon beispielsweise durch die vorstehend genannte Preßpassung oder durch Verkleben hinreichend fixiert ist, kann für die Fixierung der Anschlußeinrichtung 6 und des Federträgers 16 aneinander eine Befestigungsvorrichtung vorgesehen sein. Beim dargestellten Ausführungsbeispiel gemäß den Figuren 1 und 2 dient eine durch den Systemträger in eine Gewindebohrung 75 der Anschlußeinrichtung 6 geschraubte Schraube 76 als Befestigungsvorrichtung.

Es kann auch vorgesehen sein, daß der Steckzapfen 52 und die Steckmuffe 64 miteinander verschweißt werden, nachdem der Steckzapfen 52 in die Steckmuffe 64 gesteckt worden ist. In diesem Fall sorgt die Verschweißung sowohl für hinreichende Druckdichtheit der Steckverbindung als auch für die Fixierung des Federträgers 16 und der Anschlußeinrichtung 6 aneinander.

Wie insbesondere die Figuren 7 und 8 zeigen, umgibt eine Anschlagfläche 78 den Steckzapfen 52. Eine zugeordnete Anschlagfläche 80 ist an der Anschlußeinrichtung 6 um die Bohrung 70 der Steckmuffe 68 herum ausgebildet (siehe Figuren 9 und 10). Beim Zusammenstecken des Steckzapfens 52 und der Steckmuffe 68 kommen die Anschlagfläche 78 und 80 in Anlage aneinander, so daß dadurch die korrekte Relativstellung zwischen der Anschlageinrichtung 6 und dem Federträger 16 sowie der oberen Platine 20 in Axialrichtung des Steckzapfens 52 sichergestellt ist. Um die korrekte Drehstellung zwischen der Anschlageinrichtung 6 und dem Federträger 16 bezüglich der Achse des Steckzapfens 52 sicherzustellen, ist bei dem Ausführungsbeispiel gemäß den Figuren 1 und 2 ein in diese Elemente gesteckter Paßstift 82 vorgesehen. Dieser Paßstift ist jedoch kein notwendiges Merkmal und kann ferner durch gleichwirkende Mittel ersetzt sein.

Die Figuren 3 und 4 zeigen in den Figuren 1 und 2 ähnlichen Darstellungen ein zweites Ausführungsbeispiel des erfindungsgemäßen Druckmeßgerätes. Diejenigen Elemente des zweiten Ausführungsbeispiels, die Elementen des ersten Ausführungsbeispiels entsprechen oder gleichen sind mit den gleichen Bezugszeichen wie bei dem ersten Ausführungsbeispiel versehen und werden nicht erneut erläutert.

Das zweite Ausführungsbeispiel unterscheidet sich vom ersten Ausführungsbeispiel allein dadurch, daß seine Anschlußeinrichtung 6 und die für die Anschlußeinrichtung 6 vorgesehene Öffnung im Gehäuse 2 anders als bei dem ersten Ausführungsbeispiel ausgebildet sind.

Die Anschlußeinrichtung 6 des zweiten Ausführungsbeispiels ist insbesondere in den Figuren 11 und 12 dargestellt. Diese ist einstückig ausgebildet und umfaßt den Geräteanschluß 64, die Steckmuffe 68 und ein Z-förmiges Verbindungstück 84, durch das der Druckkanal 66 verläuft. Das Verbindungsstück 84 verbindet den Geräteanschluß 64 mit der Steckmuffe 68 derart, daß die Achse des Geräteanschlusses 64 und die Achse der Bohrung 70 der Steckmuffe 68 parallel zueinander und mit Abstand voneinander verlaufen.

Die Anschlußeinrichtung 6 des zweiten Ausführungsbeispiels ist derart in dessen Gehäuse 2 eingesetzt, daß das Verbindungsstück 84 sich durch eine Öffnung in der Rückwand 8 des Gehäuses 2 erstreckt und daß der Geräteanschluß 64 nach hinten von der Rückwand 8 vorsteht. Es handelt sich somit bei dem Druckmeßgerät gemäß dem zweiten Ausführungsbeispiel um ein Druckmeßgerät mit einem rückseitigen Anschluß. Die Steckmuffe 68 befindet sich im Inneren des Gehäuses 2. Das Meßsystem des zweiten Ausführungsbeispiels hat die gleiche Ausbildung wie das Meßsystem des ersten Ausführungsbeispiels und ist auf gleiche Weise wie bei dem ersten Ausführungsbeispiel mit der Anschlußeinrichtung 6 verbunden.

Die vorstehenden Erläuterungen des ersten und des zweiten Ausführungsbeispiels zeigen somit, daß es aufgrund der erfindungsgemäßen Ausbildung des Meßsystems und des Druckmeßgerätes möglich ist, das gleiche Meßsystem sowohl für ein Druckmeßgerät mit radialem Anschluß als auch für ein Druckmeßgerät mit rückseitigem Anschluß zu verwenden. Der Federträger 16 einerseits und die Anschlußeinrichtung 6 andererseits sind zwei separat gefertigte Einrichtungen, die innerhalb des Gehäuses 2 miteinander verbunden sind, und zwar durch eine Steckverbindung, die durch einfaches translatorisches Zusammenschieben hergestellt werden kann und keine Relativdrehung zwischen der Anschlußeinrichtung 6 einerseits und dem Federträger 16 andererseits erfordert. Da die Anschlußeinrichtung und der Federträger separat gefertigte Einrichtungen sind, können sie aus verschiedenen Werkstoffen bestehen. Der Federträger 16 besteht überlicherweise aus einem hochwertigen metallischen Werkstoff, damit er mit der Rohrfeder verlötet werden kann. Die Anschlußeinrichtung 6 braucht nicht aus dem gleichen metallischen Werkstoff zu bestehen, sondern kann aus einem preiswerteren Kunststoff bestehen und obendrein einstückig mit dem Gehäuse 2 ausgebildet sein.

Bei den zwe beschriebenen Ausführungsbeispielen des Druckmeßgerätes ist der bei vielen herkömmlichen Druckmeßgeräten verwendete Federträger für den typisch ist, daß die Anschlußeinrichtung in den Federträger integriert ist, ersetzt durch den beschriebenen, speziell ausgebildeten Federträger 16 und die mit dem Federträger 16 innerhalb des Gehäuses mittels der Steckverbindung verbundene Anschlußeinrichtung 6. Daher besteht eine Besonderheit der beschriebenen Druckmeßgeräte darin daß der herkömmliche Federträger unterteilt ist in zwei Abschnitte, nämlich einen äußeren Abschnitt, der vorstehend als Anschlußeinrichtung 6 beschrieben ist, und einen inneren Abschnitt, der vorstehend als Federträger 16 beschrieben ist.

Bei den beiden vorstehend beschriebenen Ausführungsbeispielen ist die Rohrfeder 12 bogenförmig gekrümmt. Die Rohrfeder kann jedoch auch in an sich bekannter Weise schraubenlinienförmig gekrümmt sein. Fig. 13 zeigt in einer Figur 8 ähnlichen Ansicht eine zweite Ausführungsform des Systemträgers, der sich von dem Systemträger gemäß den Figuren 5 bis 8 dadurch unterscheidet, daß das Halteteil 46 eine andere Gestalt hat. In diesem Fall ist die Ausnehmung 48 im Halteteil 46 als Sackbohrung ausgebildet, so daß diese Ausnehmung das erste Ende einer schraubenlinienförmig gekrümmten Rohrfeder aufnehmen kann.

Bei dem ersten und dem zweiten Ausführungsbeispiel des Druckmeßgerätes ist das Meßsystem in das Gehäuse 2 eingebaut und befindet sich außen am Gehäuse der Geräteanschluß 64. Fig. 14 zeigt ein drittes Ausführungsbeispiel des Druckmeßgerätes, bei dem kein äußerer Geräteanschluß vorgesehen ist. Als Ausschnitt eines den Meßstoff führenden Systems zeigt Fig. 14 eine Platte 90 in der ein Meßstoffkanal 92 ausgebildet ist. An der Platte 90 ist eine Wand 94 angeformt, die eine Kammer 96 begrenzt. Ferner ist an der Platte 90 und der Wand 94 die Steckmuffe 68 angeformt, deren Bohrung 70 durch einen Zweigkanal 98 mit dem Meßstoffkanal 92 in Verbindung steht.

Das Meßsystem des dritten Ausführungsbeispiels des Druckmeßgerätes hat die gleiche Ausbildung wie die Meßsysteme des ersten und zweiten Ausführungsbeispiels des Druckmeßgerätes und ist in der Kammer 96 angeordnet. Der Steckzapfen 52 des Federträgers 16 des Meßsystems ist in die Bohrung 70 der Steckmuffe 68 gesteckt, so daß der Meßdruck durch den Zweigkanal 98, die Bohrung 70, die Bohrung 54 im Steckzapfen 52 und den Verbindungskanal 58 (siehe Fig. 7) in das Innere der Rohrfeder 12 gelangen kann. Hinsichtlich der Mittel zum Abdichten der Steckverbindung, der Mittel zum Befestigen des Meßsystems und der Mittel zum korrekten Ausrichten desselben gelten die diesbezüglich im Zusammenhang mit der ersten Ausführungsform des Druckmeßgerätes gegebenen-Erläuterungen.

## Patentansprüche

1. Meßsystem für ein Druckmeßgerät,
mit einem Zeigerwerk (14), das eine obere Platine (20), eine ein Ritzel (32) tragende Zeigerwelle (30) und ein Zahnsegment (40) mit einem Hebelabschnitt (44) sowie einem verzahnten Abschnitt (42) aufweist, der mit dem Ritzel (32) kämmt, wobei die Zeigerwelle (30) und das Zahnsegment (40) drehbar an der oberen Platine (20) gelagert sind und wobei die Zeigerwelle (30) einen von der Vorderseite (34) der oberen Platine (20) vorstehenden Zeigerzapfen (36) aufweist,
und mit einer gekrümmten, metallischen Rohrfeder (12), die an ihrem einen, ersten Ende (50) mit einem metallischen Federträger (16) fest verbunden ist, durch den hindurch der Meßdruck in das Innere der Rohrfeder gelangen kann, und deren anderes, zweites Ende in Abhängigkeit von dem an die Rohrfeder (12) angelegten Meßdruck auslenkbar ist, wobei das zweite Ende zur Übertragung einer Auslenkung desselben zum Hebelabschnitt (44) mit diesem verbunden ist,
wobei der Federträger (16) einen Steckzapfen (52) mit einer Bohrung (54) zum Einleiten des Meßdrucks, ein Haltteil (46) mit einer Ausnehmung (48) zur Aufnahme des ersten Endes (50) der Rohrfeder (12) und ein mit dem Halteteil einstückiges Verbindungsteil (56) mit einem Verbindungskanal (58) aufweist, der die Bohrung (54) des Steckzapfens (52) mit der Ausnehmung (48) des Halteteils (46) verbindet,
wobei der Steckzapfen (52), das Halteteil (46) und das Verbindungsteil (56) auf der von dem Zeigerzapfen (36) abgewandten Seite einer die Rückseite der oberen Platine (20) enthaltenden Ebene angeordnet sind,
und wobei die Achse des Steckzapfens (52) im Wesentlichen parallel zur Zeigerwelle (30) verläuft und die Mündung der Bohrung (54) des Steckzapfens an dessen von der oberen Platine (20) abgewandtem Ende angeordnet ist,
**dadurch gekennzeichnet,**
**daß** das Halteteil (46), das Verbindungsteil (56), der Steckzapfen (52) und die obere Platine (20) einstückig miteinander ausgebildet sind,
und **daß** der Steckzapfen (52) radial neben der Zeigerwelle (30) in geringerem radialen Abstand von dieser als die Ausnehmung (48) des Halteteils (46) und mit Abstand zum Halteteil angeordnet ist.

2. Meßsystem nach Anspruch 1, **gekennzeichnet durch** ein Zifferblatt (18), das neben der Vorderseite (34) der oberen Platine (20) angeordnet ist, wobei der Abstand des Steckzapfens (52) von der Zeigerwelle (30) nicht größer als der Abstand des dem Steckzapfen (52) nächsten Randabschnitts (74) des Zifferblattes (18) von der Zeigerwelle (30) ist.

3. Meßsystem nach Anspruch 1 oder 2, **dadurch gekennzeichnet, daß** der Verbindungskanal (58) im wesentlichen in der Ebene der Rückseite der oberen Platine (20) oder parallel zu dieser Ebene verläuft.

4. Meßsystem nach eimem der Anprüche 1 bis 3, **gekennzeichnet durch** eine den Steckzapfen (52) umgebende Anschlagfläche (78).

5. Meßsystem nach einem der Ansprüche 1 bis 4, **dadurch gekennzeichnet, daß** die Rohrfeder (12) kreisbogenförmig gekrümmt ist und daß die Ausnehmung (48) im Halteteil (46) des Federträgers (16) als Nut ausgebildet ist.

6. Meßsystem nach einem der Ansprüche 1 bis 4, **dadurch gekennzeichnet, daß** die Rohrfeder schraubenlinienförmig gekrümmt ist und daß die Ausnehmung (48) im Halteteil (46) des Federträgers (16) als zylindrische Sackbohrung ausgebildet ist.

7. Druckmeßgerät mit einem Gehäuse (2), das eine Rückwand (8) und eine Seitenwand (10) aufweist, einem innerhalb des Gehäuses (2) angeordneten Meßsystem, das ein Zeigerwerk (14), eine gekrümmte, metallische Rohrfeder (12) und einen die Rohrfeder (12) tragenden Federträger (16) aufweist, und einer Anschlußeinrichtung (6) mit einem Geräteanschluß (64) zum Anschließen des Druckmeßgeräts an ein einen Meßstoff führendes System, wobei die Anschlußeinrichtung (6) einen Druckkanal (66) aufweist, durch den dem Meßsystem der Meßdruck zugeführt wird, **dadurch gekennzeichnet, daß** das Meßsystem nach einem der Ansprüche 1 bis 6 ausgebildet ist und daß die Anschlußeinrichtung (6) sich von der Außenseite des Gehäuses (2) in dessen Inneres erstreckt und innerhalb des Gehäuses (2) eine Steckmuffe (68) aufweist, die komplementär Steckzapfen (52) des Federträgers (16) des Meßsystems geformt ist und in Eingriff mit dem Steckzapfen (52) des Federträgers (16) steht.

8. Druckmeßgerät nach Anspruch 7, **dadurch gekennzeichnet, daß** die Anschlußeinrichtung (6) eine die Steckmuffe (68) umgebende Anschlagfläche (80) aufweist.

9. Druckmeßgerät nach Anspruch 8, **dadurch gekennzeichnet, daß** die Anschlagfläche (80) der Anschlußeinrichtung (6) in einer zur Zeigerwelle (30) senkrechten Ebene angeordnet ist.

10. Druckmeßgerät nach einem der Ansprüche 7 bis 9, **dadurch gekennzeichnet, daß** der Steckzapfen (52) und die Steckmuffe (68) mittels einer Preßpassung miteinander verbunden sind.

11. Druckmeßgerät nach einem der Ansprüche 7 bis 9, **dadurch gekennzeichnet, daß** der Steckzapfen (52) und die Steckmuffe (68) miteinander verklebt sind.

12. Druckmeßgerät nach einem der Ansprüche 7 bis 11, **gekennzeichnet durch** eine zwischen dem Steckzapfen (52) und der Steckmuffe (68) angeordnete O-Ringdichtung.

13. Druckmeßgerät nach einem der Ansprüche 7 bis 9, **dadurch gekennzeichnet, daß** der Steckzapfen (52) und die Steckmufe (68) mittels einer Schweißverbindung miteinander verbunden sind.

14. Druckmeßgerät nach einem der Ansprüche 7 bis 13, **dadurch gekennzeichnet, daß** die Anschlußeinrichtung (6) einstückig ausgebildet ist.

15. Druckmeßgerät nach Anspruch 14, **dadurch gekennzeichnet, daß** die Anschlußeinrichtung einstückig mit dem Gehäuse ausgebildet ist.

16. Druckmeßgerät nach einem der Ansprüche *7* bis 15, **dadurch gekennzeichnet, daß** der Geräteanschluß (64) als Gewindezapfen ausgebildet ist.

17. Druckmeßgerät nach Anspruch 16, **dadurch gekennzeichnet, daß** der Gewindezapfen an der Rückwand (8) des Gehäuses (2) angeordnet ist.

18. Druckmeßgerät nach Anspruch 16, **dadurch gekennzeichnet, daß** der Gewindezapfen an der Seitenwand (10) des Gehäuses (2) angeordnet ist.

## Claims

1. Gauging system for a pressure gauge,
with a dial train (14) which has a top plate (20), a pointer shaft (30) carrying a pinion (32), and a toothed segment (40) with a lever portion (44) and a toothed portion (42) that meshes with the pinion (32), the pointer shaft (30) and the toothed segment (40) being rotatably mounted on the top plate (20), and the pointer shaft (30) having a pointer stub (36) jutting from the front side (34) of the top plate (20),
and with a curved metal tube spring (12) fixed by one end (the "first" end) (50) to a metal spring-carrier (16) through which the gauged pressure can pass into the interior of the tube spring, the other end (the "second" end) of the tube spring (12) being deflectable as a function of the gauged pressure admitted to the tube spring (12) and being connected to the lever portion (44) to transmit any deflection of same,
the spring-carrier (16) having a spigot (52) with a bore (54) for admitting the gauged pressure, a holder part (46) with a recess (48) for seating the first end (50) of the tube spring (12), and a connector part (56), made in one piece with the holder part, with a passageway (58) connecting the bore (54) of the spigot (52) to the recess (48) in the holder part (46),
the spigot (52), holder part (46) and connector part (56) being arranged in a plane containing the back of the top plate (20) on the side facing away from the pointer stub (36),
and the axis of the spigot (52) extending substantially parallel with the pointer shaft (30) and the mouth of the bore (54) of the spigot being arranged at its end facing away from the top plate (20),
**characterized in that**
the holder part (46), connector part (56), spigot (52) and top plate (20) are all made in one piece,
and **in that** the spigot (52) is arranged radially close to the pointer shaft (30) at a smaller radial distance therefrom than the recess (48) in the holder part (46) and with clearance from the holder part.

2. Gauging system according to Claim 1, **characterized by** a dial (18) arranged close to the front side (34) of the top plate (20), the distance of the spigot (52) from the pointer shaft (30) being not more than the distance of the edge portion (74) of the dial (18) nearest the spigot (52) from the pointer shaft (30).

3. Gauging system according to Claim 1 or Claim 2, **characterized in that** the passageway (58) runs essentially in the plane of the back of the top plate (20) or parallel with this plane.

4. Gauging system according to any one of Claims 1 to 3, **characterized by** a stop face (78) surrounding the spigot (52).

5. Gauging system according to any one of Claims 1 to 4, **characterized in that** the tube spring (12) is curved in a circular arc and **in that** the recess (48) in the holder part (46) of the spring-carrier (16) is formed as a slot.

6. Gauging system according to any one of Claims 1 to 4, **characterized in that** the tube spring is curved in a helix and **in that** the recess (48) in the holder part (46) of the spring-carrier (16) is formed as a cylindrical blind hole.

7. Pressure gauge with a casing (2) which has a rear wall (8) and a side wall (10), with a gauging system, arranged inside the casing (2), which has a dial train (14), a curved metal tube spring (12) and a spring-carrier (16) carrying the tube spring (12), and with a connector device (6) with an instrument connector (64) for connecting the pressure gauge to a system conducting a substance to be gauged, wherein a connector device (6) has a pressure conduit (66) through which the gauged pressure is fed to the gauging system, **characterized in that** the gauging system is configured in accordance with any one of Claims 1 to 6 and **in that** the connector device (6) extends from the outside of the casing (2) into its interior and has a socket (68) inside the casing (2) which is shaped to match the spigot (52) of the spring-carrier (16) of the gauging system and which mates with the spigot (52) of the spring-carrier (16).

8. Pressure gauge according to Claim 7, **characterized in that** the connector device (6) has a stop face (80) surrounding the socket (68).

9. Pressure gauge according to Claim 8, **characterized in that** the stop face (80) of the connector device (6) is arranged in a plane perpendicular to the pointer shaft (30).

10. Pressure gauge according to any one of Claims 7 to 9, **characterized in that** the spigot (52) and socket (68) are joined together by a press fit.

11. Pressure gauge according to any one of Claims 7 to 9, **characterized in that** the spigot (52) and socket (68) are bonded together.

12. Pressure gauge according to any one of Claims 7 to 11, **characterized by** an O-ring seal arranged between the spigot (52) and the socket (68).

13. Pressure gauge according to any one of Claims 7 to 9, **characterized in that** the spigot (52) and socket (68) are joined together by means of a welded joint.

14. Pressure gauge according to any one of Claims 7 to 13, **characterized in that** the connector device (6) is made in one piece.

15. Pressure gauge according to Claim 14, **characterized in that** the connector device is integral with the casing.

16. Pressure gauge according to any one of Claims 7 to 15, **characterized in that** the instrument connection (64) is configured as a threaded stem.

17. Pressure gauge according to Claim 16, **characterized in that** the threaded stem is arranged on the rear wall (8) of the casing (2).

18. Pressure gauge according to Claim 16, **characterized in that** the threaded stem is arranged on the side wall (10) of the casing (2).

## Revendications

1. Système de mesure pour un manomètre,
avec un mécanisme d'aiguille (14), qui comporte une platine supérieure (20), un arbre d'aiguille (30) portant un pignon (32), et un segment denté (40) avec un tronçon formant levier (44), ainsi qu'un tronçon denté (42), qui engrène avec le pignon (32), l'arbre d'aiguille (30) et le segment denté (40) étant montés rotatifs sur la platine supérieure (20) et l'arbre d'aiguille (30) comportant un tourillon pour aiguille (36) en saillie sur la face avant (34) de la platine supérieure (20),
et avec un tube manométrique (12) métallique incurvé, dont la première extrémité (50) est assemblée fermement avec un support de tube manométrique (16) métallique, à travers lequel la pression à mesurer peut parvenir à l'intérieur du tube manométrique, et dont la deuxième extrémité peut être déviée en fonction de la pression appliquée sur le tube manométrique (12), la deuxième extrémité étant assemblée avec le tronçon formant levier (44) afin que la déviation de ladite deuxième extrémité soit transmise au tronçon formant levier (44),
le support de tube manométrique (16) comportant un tenon enfichable (52) avec un trou (54) pour introduire la pression à mesurer, une pièce de fixation (46) avec un évidement (48) destiné à recevoir la première extrémité (50) du tube manométrique (12) et une pièce de jonction (56), réalisée d'un seul tenant avec la pièce de fixation et munie d'un conduit de jonction (58), par lequel le trou (54) dans le tenon enfichable (52) communique avec l'évidement (48) dans la pièce de fixation (46),
le tenon enfichable (52), la pièce de fixation (46) et la pièce de jonction (56) étant agencés sur le côté, opposé au tourillon pour aiguille (36), d'un plan contenant la face arrière de la platine supérieure (20),
et l'axe du tenon enfichable (52) est sensiblement parallèle à l'arbre d'aiguille (30) et la sortie du trou (54) du tenon enfichable est agencée sur l'extrémité de celui-ci, opposée à la platine supérieure (20),
**caractérisé**
**en ce que** la pièce de fixation (46), la pièce de jonction (56), le tenon enfichable (52) et la platine supérieure (20) sont réalisés d'un seul tenant les uns avec les autres,
et **en ce que** le tenon enfichable (52) est monté radialement à côté de l'arbre d'aiguille (30) à une plus faible distance radiale que l'évidement (48) de la pièce de fixation (46) et à distance de la pièce de fixation (46).

2. Système de mesure selon la revendication 1, **caractérisé par** un cadran (18), monté à côté de la face avant (34) de la platine supérieure (20), la distance entre le tenon enfichable (52) et l'arbre d'aiguille (30) n'étant pas supérieure à la distance entre le bord (74) du cadran (18), le plus proche du tenon enfichable (52), et l'arbre d'aiguille (30).

3. Système de mesure selon la revendication 1 ou 2, **caractérisé en ce que** le conduit de jonction (58) s'étend sensiblement dans le plan de la face arrière de la platine supérieure (20) ou est parallèle à celui-ci.

4. Système de mesure selon l'une quelconque des revendications 1 à 3, **caractérisé par** une surface de butée (78) entourant le tenon enfichable (52).

5. Système de mesure selon l'une quelconque des revendications 1 à 4, **caractérisé en ce que** le tube manométrique (12) est incurvé en forme d'arc de cercle et **en ce que** l'évidement (48) dans la pièce de fixation (46) du support de tube manométrique (16) est conçu sous forme de rainure.

6. Système de mesure selon l'une quelconque des revendications 1 à 4, **caractérisé en ce que** le tube manométrique (12) est incurvé selon une forme hélicoïdale et **en ce que** l'évidement (48) dans la pièce de fixation (46) du support de tube manométrique (16) est conçu sous forme de trou borgne cylindrique.

7. Manomètre comportant un boîtier (2), qui comporte une paroi arrière (8) et une paroi latérale (10), un système de mesure, qui est agencé à l'intérieur du boîtier (2) et qui comporte un mécanisme d'aiguille (14), un tube manométrique (12) métallique incurvé et un support de tube manométrique (16) qui porte le tube manométrique (12), et comportant un dispositif de raccordement (6) avec un raccord du manomètre (64) destiné à raccorder le manomètre à un système contenant le fluide à mesurer, le dispositif de raccordement (6) étant muni d'un conduit de pression (66), à travers lequel la pression à mesurer est acheminée vers le système de mesure, **caractérisé en ce que** le système de mesure est conçu selon l'une quelconque des revendications 1 à 6 et **en ce que** le dispositif de raccordement (6) s'étend depuis la face extérieure du boîtier (2) à l'intérieur de celui-ci et comporte un manchon d'enfichage (68) à l'intérieur du boîtier (2), qui est réalisé avec une forme complémentaire à celle du tenon enfichable (52) du support de tube manométrique (16) du système de mesure et est en prise avec le tenon enfichable (52) du support de tube manométrique (16).

8. Manomètre selon la revendication 7, **caractérisé en ce que** le dispositif de raccordement (6) comporte une surface de butée (80) qui entoure le manchon d'enfichage (68).

9. Manomètre selon la revendication 8, **caractérisé en ce que** la surface de butée (80) du dispositif de raccordement (6) est montée dans un plan perpendiculaire à l'arbre d'aiguille (30).

10. Manomètre selon l'une quelconque des revendications 7 à 9, **caractérisé en ce que** le tenon enfichable (52) et le manchon d'enfichage (68) sont assemblés entre eux au moyen d'un ajustage serré.

11. Manomètre selon l'une quelconque des revendications 7 à 9, **caractérisé en ce que** le tenon enfichable (52) et le manchon d'enfichage (68) sont collés l'un à l'autre.

12. Manomètre selon l'une quelconque des revendications 7 à 11, **caractérisé par** un joint torique posé entre le tenon enfichable (52) et le manchon d'enfichage (68).

13. Manomètre selon l'une quelconque des revendications 7 à 9, **caractérisé en ce que** le tenon enfichable (52) et le manchon d'enfichage (68) sont assemblés l'un à l'autre au moyen d'un assemblage soudé.

14. Manomètre selon l'une quelconque des revendications 7 à 13, **caractérisé en ce que** le dispositif de raccordement (6) est réalisé d'un seul tenant.

15. Manomètre selon la revendication 14, **caractérisé en ce que** le dispositif de raccordement est réalisé d'un seul tenant avec le boîtier.

16. Manomètre selon l'une quelconque des revendications 7 à 15, **caractérisé en ce que** le raccord du manomètre (64) est conçu sous forme de tenon fileté.

17. Manomètre selon la revendication 16, **caractérisé en ce que** le tenon fileté est agencé sur la paroi arrière (8) du boîtier (2).

18. Manomètre selon la revendication 16, **caractérisé en ce que** le tenon fileté est agencé sur la paroi latérale (10) du boîtier (2).
